# EUROPÄISCHE PATENTANMELDUNG

(11) **EP 2 234 259 A1**
(43) Veröffentlichungstag der Anmeldung: **29.09.2010**
(21) Anmeldenummer: 10155612.4
(22) Anmeldetag: 05.03.2010
(51) Int. Cl.: H02M 5/22

(54) **Vorrichtung zum Zünden und zur Inbetriebnahme von Siliziumstäben**

(30) Priorität: 11.03.2009 DE 202009003325 U
(71) Anmelder: AEG Power Solutions B.V., 1161 AH Zwanenburg (NL)
(72) Erfinder: Wallmeier, Peter, 59556, Lippstadt (DE); Diezmann, Holger, 58640, Iserlohn (DE)
(74) Vertreter: Basfeld, Rainer

(57) **Zusammenfassung**

Die Erfindung betrifft eine Schaltungsanordnung (A) zum Zünden von vier Siliziumdünnstäben (81 bis 84) in einem Reaktor zum Herstellen eine Anzahl von vier Siliziumstäben aus den Siliziumdünnstäben (81 bis 84) nach dem Siemens-Verfahren und zur Inbetriebnahme eines solchen Reaktors,
- mit einem ersten Anschluss, einem zweiten Anschluss und einem dritten Anschluss zur Verbindung mit einem dreiphasigen Spannungsnetz,
- mit zwei äußeren Anschlüssen (Z1, Z6) und wenigstens drei inneren Anschlüssen (Z2, Z3/Z4, Z5) zum Anschließen der Siliziumdünnstäbe (81 bis 84),
- mit zwei äußeren Transformatoren (T1, T4) und zwei inneren Transformatoren (T2, T3) mit je einer Primärwicklung und je einer Sekundärwicklung ,
- mit zwei äußere Leistungssteller (A100, A400), die zum Steuern des Stroms durch die Primärwicklungen der äußeren Transformatoren geeignet und eingerichtet sind,
- mit zwei inneren Leistungsstellern (A200, A300), die zum Steuern des Stroms durch die Primärwicklungen der inneren Transformatoren geeignet und eingerichtet sind,
- mit einem oder mehreren Steuerungsmitteln zum Steuern der Leistungssteller (A100, A200, A300, A400),
- wobei die Primärwicklung der äußeren Transformatoren (T1, T4) parallel geschaltet sind und diese Parallelschaltung einerseits mit dem ersten Anschluss (L1) und andererseits mit dem zweiten Anschluss (L2) zur Verbindung mit dem dreiphasigen Spannungsnetz verbunden ist,
- wobei die Primärwicklungen der inneren Transformatoren (T2, T3) parallel geschaltet sind und diese Parallelschaltung einerseits mit dem zweiten Anschluss (L2) und andererseits mit dem dritten Anschluss (L3) zur Verbindung mit dem dreiphasigen Spannungsnetz verbunden ist,
- wobei eine erste Anzapfung (T1.2.1) der Sekundärwicklung eines ersten (T1) der beiden äußeren Transformatoren (T1, T4) mit einem ersten der beiden äußeren Anschlüsse (Z1) verbunden ist und
- eine zweite Anzapfung (T1.2.2)der Sekundärwicklung des ersten äußeren Transformators (T1) mit einer ersten Anzapfung (T2.2.1) der Sekundärwicklung eines ersten Transformators (T2) der beiden inneren Transformatoren (T2, T3) und mit einem ersten Anschluss (Z2) der drei inneren Anschlüsse (Z2, Z3/4, Z5) verbunden ist,
- eine zweite Anzapfung (T2.2.2) der Sekundärwicklung des ersten inneren Transformators (T2) mit einer ersten Anzapfung (T3.2.1) der Sekundärwicklung eines zweiten Transformators (T3) der beiden inneren Transformatoren (T2, T3) und mit einem zweiten Anschluss (Z3/4) der drei inneren Anschlüsse (Z2, Z3/4, Z5) verbunden ist,
- eine zweite Anzapfung (T3.2.2) der Sekundärwicklung des zweiten inneren Transformators (T3) mit einer ersten Anzapfung (T4.2.1) der Sekundärwicklung eines zweiten Transformators (T4) der beiden äußeren Transformatoren (T1 , T4) und mit einem dritten Anschluss (Z4) der drei inneren Anschlüsse (Z2, Z3/4, Z5) verbunden ist
- wobei eine zweite Anzapfung (T4.2.2) der Sekundärwicklung des zweite äußeren Transformators (T4) mit einem zweiten Anschluss (Z6) der beiden äußeren Anschlüsse (Z1, Z6) verbunden ist und
- wobei die beiden äußeren Anschlüsse (Z1, Z6) über Schaltmittel (31, 32) miteinander und mit Masse verbindbar sind.

## Beschreibung

Die Erfindung betrifft eine Schaltungsanordnung zum Zünden von vier Siliziumdünnstäben in einem Reaktor zum Herstellen von Siliziumstäben aus den Siliziumdünnstäben nach dem Siemens-Verfahren und zur Inbetriebnahme eines solchen Reaktors. Es ist ferner ein Verfahren zum Zünden der Siliziumdünnstäbe und zum Hochfahren, das heißt zur Inbetriebnahme des Reaktors beschrieben.

Aus der Druckschrift DE 20 2004 014 812 U1 ist eine Vorrichtung zur Versorgung eines Reaktors zum Erzeugen von Siliziumstäben nach dem Siemens-Verfahren bekannt, die ein erstes Versorgungsmittel zur Spannungsversorgung und ein zweites Versorgungsmittel zur Spannungsversorgung aufweist. Das erste Versorgungsmittel dient dazu die Silizium-Dünnstäbe während einer Startphase des Abscheideprozesses, das heißt während des Zündens der Siliziumdünnstäbe und des Hochfahrens des Reaktors mit Spannung zu versorgen. Das zweite Spannungsversorgungsmittel ist dazu vorgesehen, im Anschluss an die Startphase während des Betriebs die Spannungsversorgung der Silizium-Dünnstäbe und der sich daraus entwickelnden Siliziumstäbe sicher zu stellen.

Während der Startphase werden die Silizium-Dünnstäbe über das erste Versorgungsmittel mit einer so genannten Mittelspannung versorgt, die größer ist als 2500 V. Mit derartig hohen Spannungen kann das Zünden der Silizium-Dünnstäbe erreicht werden. Sind alle Silizium-Dünnstäbe gezündet, ist die Startphase beendet. Die Spannungsversorgung der Silizium-Dünnstäbe und der sich darauf bildenden Siliziumstäbe wird dann von dem zweiten Versorgungsmittel übernommen, das die Silizium-Dünnstäbe mit einer Spannung unterhalb von 2500 V versorgt.

Während in der Betriebsphase die Silizium-Dünnstäbe bzw. Siliziumstäbe in Reihe geschaltet sind und die Reihenschaltung von dem zweiten Versorgungsmittel mit Spannung versorgt wird. Es ist allerdings auch möglich, dass die Silizium-Dünnstäbe bzw. Siliziumstäbe während der Betriebsphase zunächst einzeln mit der vom zweiten Versorgungsmittel zur Verfügung gestellten Spannung versorgt werden, gruppenweise mit der Spannung versorgt werden oder in Reihe geschaltet mit der Spannung versorgt werden. Zwischen den einzelnen Schaltungsarten kann während der Betriebsphase gewechselt werden, je nachdem wie sich der elektrische Widerstand der Siliziumstäbe einstellt und welche Leistung in den Siliziumstäben umgesetzt werden soll.

Die in der genannten Druckschrift beschriebene Vorrichtung hat sich in der Praxis in der offenbarten Form nicht durchgesetzt. Vielmehr wurden in der Praxis Vorrichtungen aufgebaut, bei denen Leistungsschalter in Reihe zu den Anschlüssen des Eingangs des zweiten Spannungsversorgungsmittels eingesetzt waren. Die Leistungsschalter sind jedoch technisch aufwendig und kostenträchtig, insbesondere weil sie für Mittelspannung geeignet sein müssen. Außerdem müssen sie in der Lage sein, in der Betriebsphase Ströme von über 1000 A führen zu können. Da es sich um ein mechanisches Bauteil handelt, ist deshalb während der Lebensdauer des Reaktors eine Wartung des Leistungsschalters notwendig.

Der Erfindung lag daher die Aufgabe zugrunde, eine Schaltungsanordnung zum Zünden von vier Siliziumdünnstäben in einem Reaktor zum Herstellen von vier Siliziumstäben aus den Siliziumdünnstäben nach dem Siemens-Verfahren und zur Inbetriebnahme eines solchen Reaktors vorzuschlagen, wobei die Schaltungsanordnung einerseits ohne Leistungsschalter in den Strompfaden für hohe Ströme auskommt und andererseits eine Zündung aller Silizium-Dünnstäbe gewährleistet ist.

Diese Aufgabe wird durch eine Vorrichtung mit den Merkmalen nach Anspruch 1 gelöst.

Eine erfindungsgemäße Schaltungsanordnung hat demnach einen ersten Anschluss, einen zweiten Anschluss und einen dritten Anschluss zur Verbindung mit einem dreiphasigen Spannungsnetz, aus dem die Versorgung mit elektrischer Energie erfolgt. Für den Anschluss der Siliziumdünnstäbe bzw. Siliziumstäbe hat die erfindungsgemäße Schaltungsanordnung insgesamt fünf Anschlüsse von denen zwei als äußere Anschlüssen und drei als inneren Anschlüssen bezeichnet werden.

Die erfindungsgemäße Schaltungsanordnung weist insgesamt vier Transformatoren auf, von denen jeweils ein Transformator zur Versorgung eines Siliziumdünnstabes bzw. Siliziumstabes vorgesehen ist. Zwei der vier Transformatoren werden äußere Transformatoren und zwei als inneren Transformatoren bezeichnet. Jeder Transformator hat je eine Primärwicklung und je eine Sekundärwicklung.

Ferner sind insgesamt vier Leistungssteller zum Steuern des Stroms durch die Primärwicklungen der Transformatoren vorgesehen. Die zwei den äußeren Transformatoren zugeordneten Leistungssteller werden als äußere Leistungssteller bezeichnet und die beiden den inneren Transformatoren zugeordneten Leistungssteller als innere Leistungssteller.

Die Schaltungsanordnung weist ein oder mehrere Steuerungsmittel zumindest zum Steuern der Leistungssteller auf.

Bei einer erfindungsgemäßen Schaltungsanordnung sind die Primärwicklungen der äußeren Transformatoren parallel geschaltet. Diese Parallelschaltung ist einerseits über den ersten Anschluss und andererseits über den zweiten Anschluss mit dem dreiphasigen Spannungsnetz verbunden. Auch die Primärwicklungen der inneren Transformatoren sind parallel geschaltet. Diese Parallelschaltung ist einerseits mit dem zweiten Anschluss und andererseits mit dem dritten Anschluss zur Verbindung mit dem dreiphasigen Spannungsnetz verbunden.

Neben der vorgenannten Verschaltung auf den Primärseiten der Transformatoren kommt es bei einer erfindungsgemäßen Schaltungsanordnung aber auch auf die sekundärseitige Verschaltung an. Die Anzapfungen der Transformatoren sind dazu folgendermaßen miteinander und mit den Anschlüssen für die Siliziumdünnstäbe bzw. Siliziumstäbe verbunden.

Eine erste Anzapfung der Sekundärwicklung eines ersten der beiden äußeren Transformatoren ist mit einem ersten der beiden äußeren Anschlüsse verbunden ist während eine zweite Anzapfung der Sekundärwicklung des ersten äußeren Transformators mit einer ersten Anzapfung der Sekundärwicklung eines ersten Transformators der beiden inneren Transformatoren verbunden ist. Außerdem in die zweite Anzapfung des ersten äußeren Transformators und die erste Anzapfung des ersten inneren Transformators mit einem ersten Anschluss der drei inneren Anschlüsse verbunden.

Eine zweite Anzapfung der Sekundärwicklung des ersten inneren Transformators ist mit einer ersten Anzapfung der Sekundärwicklung eines zweiten Transformators der beiden inneren Transformatoren und mit einem zweiten der drei inneren Anschlüsse verbunden.

Eine zweite Anzapfung der Sekundärwicklung des zweiten inneren Transformators ist mit einer ersten Anzapfung der Sekundärwicklung eines zweiten Transformators der beiden äußeren Transformatoren und mit einem dritten der drei inneren Anschlüsse verbunden.

Schließlich ist eine zweite Anzapfung der Sekundärwicklung des zweiten äußeren Transformators mit einem zweiten der beiden äußeren Anschlüsse verbunden ist.

Bei einer erfindungsgemäßen Schaltungsanordnung können die beiden äußeren Anschlüsse über Schaltmittel miteinander und mit Masse verbunden werden. Die Schaltmittel können dazu von dem Steuermittel oder den Steuermitteln angesteuert werden.

Die erfindungsgemäße Schaltungsanordnung ist besonders geeignet, um mit einer bekannten zweiten Schaltungsanordnung, z.B. einem eingangs genannten zweiten Spannungsversorgungsmittel zur Versorgung der Siliziumdünnstäbe beziehungsweise Siliziumstäbe in einer Betriebsphase, das heißt, nach dem Zünden der Siliziumdünnstäbe und nach dem Hochfahren des Reaktors gekoppelt zu werden.

Zwei äußere Anschlüsse des Ausgangs der zweiten Schaltungsanordnung liegen auf dem gleichen Potential wie die äußeren Anschlüsse der erfindungsgemäßen Schaltungsanordnung. Vorteilhaft sind während der Startphase, das heißt während des Zündens der Stäbe und während des Hochfahrens des Reaktors, die äußeren Anschlüsse über steuerbare Schaltmittel mit der Masse verbunden. Auch ein weiterer Anschluss des Ausgangs der zweiten Schaltungsanordnung wird während der Startphase mit der Masse verbunden. Dieser weitere Anschluss des Ausgangs ist über ein Schaltmittel vom zweiten inneren Anschluss getrennt, mit dem er während der Betriebsphase über einen zweiten und dritten Siliziumstab verbunden ist.

Durch das Verbinden beider äußeren Anschlüsse der erfindungsgemäßen Schaltungsanordnung mit der Masse während der Startphase werden zur Entkopplung der beiden Schaltungsanordnungen vorgesehene Schaltmittel im Lastkreis der zweiten Schaltungsanordnung überflüssig. Dadurch kann eine Rückwirkung der erfindungsgemäßen Schaltungsanordnung auf eine zweite Schaltungsanordnung, die die Stäbe während der Betriebsphase mit elektrischer Energie versorgt, vermieden werden. Während der sich an die Startphase anschließenden Betriebsphase werden die steuerbaren Schaltmittel geöffnet.

Eine erfindungsgemäße Schaltungsanordnung kann Stromerfassungsmittel aufweisen, um den Strom durch die Primärwicklungen der Transformatoren zu erfassen. Ebenso ist es möglich, dass die Schaltungsanordnung Spannungserfassungsmittel aufweist, um die Spannung über die Primärwicklungen der Transformatoren zu erfassen. Grundsätzlich ist es auch denkbar, dass eine erfindungsgemäße Schaltungsanordnung Strom- und Spannungserfassungsmittel aufweist, mit denen der Strom beziehungsweise die Spannung durch die Sekundärwicklungen beziehungsweise über die Sekundärwicklungen der Transformatoren erfasst werden kann.

Die Stromerfassungsmittel und die Spannungserfassungsmittel einer erfindungsgemäßen Schaltungsanordnung können mit dem oder den Steuerungsmitteln der Schaltungsanordnung verbunden sein.

Die Transformatoren einer erfindungsgemäßen Schaltungsanordnung sind zum Transformieren einer primärseitigen Niederspannung, zum Beispiel einer Wechselspannung von 400 V, in einer sekundärseitigen Mittelspannung, zum Beispiel einer Wechselspannung mit 6 kV bis 8 kV geeignet und eingerichtet.

Die Transformatoren können ein Übersetzungsverhältnis von 15 bis 20 haben. Die Transformatoren sind vorzugsweise gleich. Die Primärwicklungen haben insbesondere einen gleichen Wicklungssinn wie auch die Sekundärwicklungen.

Das oder die Steuermittel einer erfindungsgemäßen Schaltungsanordnung kann beziehungsweise können geeignet und eingerichtet sein, dass zum Zünden der mit einem der äußeren Anschlüsse und einem der inneren Anschlüsse verbundenen Siliziumdünnstäbe nacheinander zunächst die Leistungssteller eingeschaltet werden, an deren Ausgängen die Transformatoren angeschlossen sind, deren Sekundärspulen mit einem äußeren Anschluss und einem inneren Anschluss verbunden sind. Zunächst werden also die Siliziumdünnstäbe mit der Sekundärspannung der zugeordneten Transformatoren beaufschlagt, die am Anfang beziehungsweise am Ende der Reihenschaltung aus den Siliziumdünnstäben vorgesehen sind. Das Steuerungsmittel beziehungsweise die Steuerungsmittel sind so ausgestaltet, dass zunächst einer der beiden Siliziumdünnstäbe gezündet wird und anschließend der weitere gezündet wird. Die Siliziumdünnstäbe werden nicht gleichzeitig mit Spannung beaufschlagt sondern nacheinander.

Gemäß der Erfindung sind das oder die Steuerungsmittel vorteilhaft geeignet und eingerichtet, dass zum Zünden der ausschließlich mit zwei der inneren Anschlüsse verbundenen Siliziumdünnstäbe nacheinander die äußeren Leistungssteller eingeschaltet werden. Nachdem die über die äußeren Leistungssteller bzw. äußeren Transformatoren mit elektrischer Leistung versorgten Siliziumdünnstäbe gezündet haben, werden nun nacheinander die zwischen diesen beiden Siliziumdünnstäben angeordneten Siliziumdünnstäbe mit Spannung beaufschlagt. Die Steuermittel beziehungsweise das Steuermittel sind so eingerichtet, dass nicht zwei Siliziumdünnstäbe gleichzeitig zum Zünden mit Spannung versorgt werden.

Das oder die Steuerungsmittel und die Leistungssteller können gemäß der Erfindung geeignet und eingerichtet sein, den Strom durch die Primärwicklungen zu regeln. Beispielsweise kann der Strom während des Zündens auf 20 A geregelt werden. Gemäß der Erfindung kann das oder können die Steuerungsmittel geeignet und eingerichtet sein die Leistungssteller auszuschalten, wenn bei geregeltem Strom durch die Primärwicklung die Spannung über der Primärwicklung auf einen vorgegebenen Betrag, zum Beispiel auf die Hälfte absinkt. Der Betrag, auf den die Spannung durch die Primärwicklung absinkt, kann beispielsweise 200 V betragen. Ist die Spannung auf den vorgegebenen Betrag abgesunken, kann man davon ausgehen, dass der über diesen Leistungssteller beziehungsweise Transformator versorgte Siliziumdünnstab gezündet hat.

Nachdem alle Siliziumdünnstäbe einmal gezündet haben, und dazu von den zugeordneten Leistungsstellern mit Spannung beaufschlagt worden sind, ist die Zündphase abgeschlossen und der der Reaktor wird hochgefahren, das heißt in Betrieb genommen werden.

Das Steuerungsmittel kann oder die Steuerungsmittel können geeignet und eingerichtet sein, nach dem Ausschalten des letzten Leistungsstellers zur Inbetriebnahme des Reaktors alle Leistungssteller gleichzeitig einzuschalten, um an den Primärwicklungen aller Transformatoren einen gleichen Strom mit einem vorgegebenen Sollwert einzustellen. Vorteilhaft kann das Steuerungsmittel oder können die Steuerungsmittel geeignet und eingerichtet sein, den Sollwert schrittweise zu erhöhen. Der Sollwert kann solange erhöht werden, bis das Hochfahren des Reaktors und damit die Startphase abgeschlossen ist. Ist die Startphase abgeschlossen, kann die Versorgung der Siliziumstäbe während der Betriebsphase über die zweite Schaltungsanordnung erfolgen.

Gemäß der Erfindung kann das Steuerungsmittel oder können die Steuerungsmittel geeignet und eingerichtet sein, den Sollwert vorübergehend herabzusetzen, wenn die Spannung über die Primärseite eines der Transformatoren um einen vorgegebenen Betrag von den Spannungen über die Primärwicklungen der anderen Transformatoren abweicht. Eine solche Abweichung kann vorliegen, wenn ein Siliziumstab verspätet zündet. In diesem Fall wird das Hochfahren gestoppt und einen Schritt zurückgegangen, um den nicht gezündeten Siliziumstäben ausreichend Zeit zu geben noch zu zünden.

Bei einer erfindungsgemäßen Schaltungsanordnung kann das Steuerungsmittel oder können die Steuerungsmittel so ausgestaltet sein, dass alle Leistungssteller ausgeschaltet werden, wenn die Spannung über die Primärwicklung eines der Transformatoren der Spannung im Leerlauf des Transformators entspricht. In diesem Fall wird der Transformator nicht belastet, was dafür spricht, dass der Siliziumdünnstab oder der Siliziumstab den Stromkreis über die Sekundärwicklung des Transformators nicht schließen. In einem solchen Fall kann der Siliziumstab beispielsweise gebrochen sein. Es liegt dann ein Fehler vor, der einen manuellen Eingriff der Bediener erfordert.

Gemäß der Erfindung kann jedem Leistungssteller ein Steuermittel zugeordnet sein. Die Schaltungsanordnung kann außerdem ein oder mehrere übergeordnete Steuermittel aufweisen, die mit den den Leistungsstellern zugeordneten Steuermitteln gekoppelt sind. Das übergeordnete Steuermittel kann eine Schnittstelle aufweisen, über die es mit einem übergeordneten Steuermittel der zweiten Schaltungsanordnung verbunden ist. Über diese Schnittstelle kann das übergeordnete Steuermittel ein Signal an das übergeordnete Steuermittel der zweiten Schaltungsanordnung geben, falls die Startphase erfolgreich abgeschlossen ist, das heißt alle Siliziumdünnstäbe gezündet worden sind und der Reaktor erfolgreich hochgefahren worden ist.

Es sei darauf hingewiesen, dass die Begriffe Siliziumdünnstab bzw. Siliziumstab, wie sie in dieser Anmeldung verwendet werden, in der Praxis durch Paare von Siliziumdünnstäben oder Paare von Siliziumstäben handeln kann.

Weitere Merkmale und Vorteile der Erfindung werden deutlich anhand der nachfolgenden Beschreibung eines bevorzugten Ausführungsbeispiels, das in den beigefügten Zeichnungen dargestellt ist. Es zeigt:

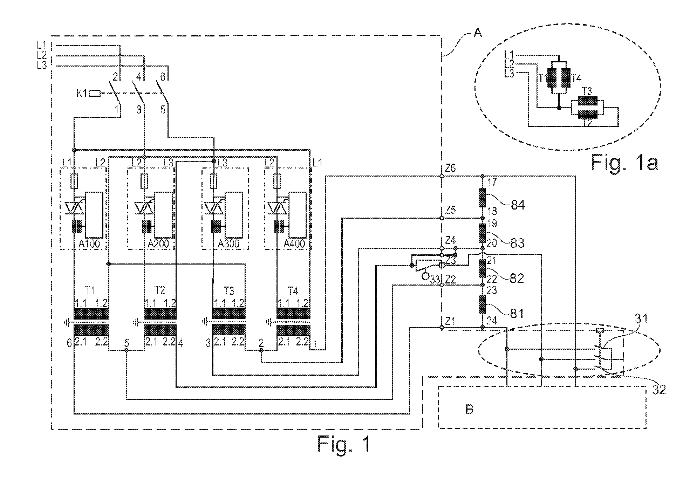

- Fig. 1: ein vereinfachtes Schaltbild der erfindungsgemäßen Schaltungsanordnung,
- Fig. 1 a: ein Schaltbild der Anordnung von Primärwicklungen ohne Berücksichtigung von Leistungsstellern und
- Fig. 2: ein schematische Flussdiagramm eines mit der Schaltungsanordnung durchgeführten Verfahrens.

In dem vereinfachten Schaltbild gemäß Figur 1 ist die erfindungsgemäße Schaltungsanordnung mit A bezeichnet. Die erfindungsgemäße Schaltungsanordnung A weist einen Schalter K1 auf, über die sie mit einem dreiphasigen Spannungsversorgungsnetz L1, L2, L3 verbunden werden kann. An Anschlüssen Z1, Z2, Z3/4, Z5, Z6 der erfindungsgemäßen Schaltungsanordnung A sind Siliziumdünnstäbe 81 bis 84 angeschlossen. Die Siliziumdünnstäbe 81 bis 84 sind ferner an eine zweite Schaltungsanordnung B angeschlossen.

Die erfindungsgemäße Schaltungsanordnung A und die zweite Schaltungsanordnung B sind über einen nicht dargestellten Bus miteinander verbunden, um Informationen, insbesondere Status- und Steuersignale austauschen zu können.

Die erfindungsgemäße Schaltungsanordnung A dient dazu die Siliziumstäbe beziehungsweise Siliziumdünnstäbe 81 bis 84 zu zünden und den Reaktor, in welchen die Siliziumdünnstäbe 81 bis 84 angeordnet sind hochzufahren. Ist diese Startphase beendet, wird die Spannungsversorgung der Siliziumdünnstäbe 81 bis 84 durch die zweite Schaltungsanordnung B übernommen. Die Spannungsversorgung der Siliziumdünnstäbe 81 bis 84 durch die erste, erfindungsgemäße Anordnung A ist dann beendet.

Zur Versorgung der Siliziumdünnstäbe während der Startphase weist die erfindungsgemäße Schaltungsanordnung Leistungssteller A100, A200, A300, A400, Transformatoren T1, T2, T3, T4 und die Anschlüsse Z1, Z2, Z3/4, Z5, Z6 auf. Die Leistungssteller A100, A200, A300, A400 sind an jeweils einer der Phasen L1, L2, L3 angeschlossen und an eine Primärseite eines der Transformatoren T1, T2, T3, T4 angeschlossen. Die Primärseiten der Transformatoren T1, T2, T3, T4 sind ferner an einer der Phasen L1, L2, L3 angeschlossen. Zwischen den Phasen fällt eine Wechselspannung von 400V ab.

Ein als erster äußerer Leistungssteller A100 bezeichneter Leistungsteller ist an die Phase L1 und eine erste Anzapfung 1.1 der Primärwicklung des als ersten äußeren Transformator T1 bezeichneten Transformators angeschlossen. Eine zweite primärseitige Anzapfung 1.2 des ersten äußeren Transformators T1 ist ferner mit der zweiten Phase L2 verbunden. Im einzelnen sind folgende Verbindungen vorgesehen:

Ein erstere innerer Leistungssteller A200 ist an die Phase L2 und eine erste Anzapfung 1.1 auf der Primärseite eines ersten inneren Transformators T2 angeschlossen. Eine zweite Anzapfung 1.2 der Primärwicklung des ersten inneren Transformators T2 ist mit der Phase L3 verbunden.

Ein zweiter innerer Leistungssteller A300 ist an die Phase L3 und eine erste primärseitige Anzapfung 1.1 eines zweiten inneren Transformators T3 angeschlossen. Eine zweite Anzapfung 1.2 der Primärwicklung des zweiten inneren Transformators T3 ist mit der Phase L2 verbunden.

Der vierte Leistungssteller, der als zweiter äußerer Leistungssteller A400 bezeichnet wird, ist mit der Phase L2 und mit einer Primärwicklung 1.1 eines als zweiten äußeren Transformator T4 bezeichneten Transformator verbunden. Eine zweite primärseitige Anzapfung 1.2 des zweiten äußeren Transformators T4 ist mit der der Phase L1 verbunden.

Neben den Primärwicklungen weisen die Transformatoren T1, T2, T3, T4 Sekundärwicklungen auf. Die Sekundärwicklungen sind mit den Anschlüssen Z1, Z2, Z3/4, Z5, Z6 verbunden, an welche die Siliziumdünnstäbe angeschlossen sind.

Eine erste Anzapfung 2.1 der Sekundärwicklung des ersten äußeren Transformators T1 ist über ein Schaltmittel 31 mit der Masse verbunden. Die erste Anzapfung 2.1 der Sekundärwicklung des ersten äußeren Transformators T1 ist auch mit einem ersten äußeren Anschluss Z1 der Anschlüsse für die Siliziumdünnstäbe verbunden. Eine zweite sekundärseitige Anzapfung 2.2 des ersten äußeren Transformators T1 ist mit einem ersten inneren Anschluss Z2 verbunden. An den ersten äußeren Anschluss Z1 und den ersten inneren Anschluss Z2 ist ein erster Siliziumdünnstab 81 angeschlossen.

Eine erste Anzapfung 2.1 der Sekundärwicklung des ersten inneren Transformators T2 ist ebenfalls mit dem ersten inneren Anschluss Z2 verbunden, während eine zweite innere Anzapfung 2.2 mit einem zweiten inneren Anschluss Z3 verbunden ist. Ein zweiter Siliziumdünnstab 82 ist an diese beiden inneren Anschlüsse Z2, Z3 angeschlossen.

Mit einer ersten Anzapfung der Sekundärwicklung des zweiten innern Transformators T3 ist der innere Anschluss Z4 verbunden. Zwischen diesem inneren Anschluss Z4 und dem inneren Anschluss Z3 liegt eine Brücke. Diese Anschlüsse bilden daher bei Betrachtung der elektrischen Potentiale einen einzigen Anschluss, der in dieser Anmeldung als zweiter innerer Anschluss Z3/4 bezeichnet wird. Eine zweite sekundärseitige Anzapfung 2.2 des zweiten inneren Transformators T3 ist mit einem dritten inneren Anschluss Z5 verbunden. An den zweiten und dritten inneren Anschluss Z3/4, Z5 ist ein dritter Siliziumdünnstab 83 angeschlossen.

Eine erste Anzapfung der Sekundärwicklung des zweiten äußeren Transformators T4 ist mit dem dritten inneren Anschluss Z5 und eine zweite Anzapfung mit einem zweiten äußeren Anschluss Z6 verbunden. An den dritten inneren Anschluss Z5 und den zweiten äußeren Anschluss Z6 ist ein vierter Siliziumdünnstab 84 angeschlossen.
Die zweite Anzapfung der Sekundärwicklung des zweiten äußeren Transformators T4 ist über ein Schaltmittel 32 mit Masse verbunden.

Während der Startphase sind die Schaltmittel 31, 32 geschlossen. Bei den Schaltmitteln 31 , 32 handelt es sich um steuerbare Schaltmittel, die von einem übergeordneten Steuermittel der erfindungsgemäßen Schaltungsanordnung A angesteuert werden.

Die äußeren Anschlüsse Z1, Z6 sowie der zweite innere Anschluss Z3/4 sind mit der zweiten Schaltungsanordnung B verbunden. Die Siliziumdünnstäbe 81 bis 84 können somit bei geöffneten Schaltmitteln 31, 32 und ggf. einem geschlossenem weiteren Schaltmittel 33 mit einer Spannung aus der zweiten Schaltungsanordnung B versorgt werden.

In den Leistungsstellern A100, A200, A300, A400 sind Stromerfassungsmittel und Spannungserfassungsmittel vorgesehen, mit denen die Ströme durch die Primärspulen beziehungsweise die Spannungen über den Primärspulen erfasst werden können.

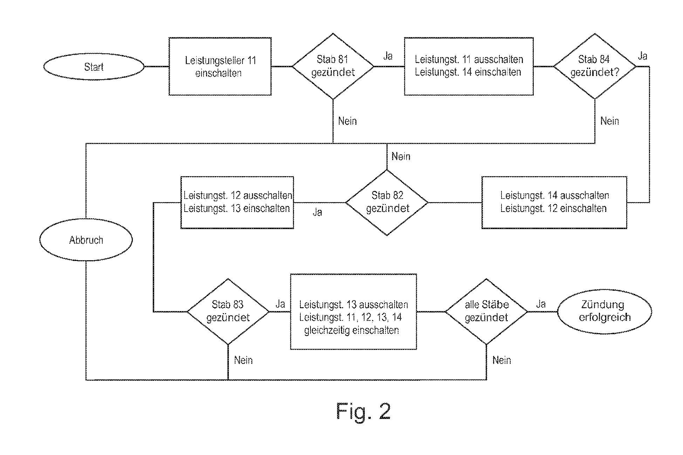

Zum Zünden der Siliziumdünnstäbe 81 bis 84 wird zunächst folgendermaßen vorgegangen (Fig. 2):

Zunächst wird der erste äußere Leistungssteller A100 eingeschaltet. Es liegt dann eine Spannung von 400V über der Primärwicklung des ersten äußeren Transformators T1 an. Aufgrund des Übersetzungsverhältnisses von 15 ergibt sich dann an der Sekundärwicklung eine Sekundärspannung von 6kV,die zwischen dem ersten äußeren Anschluss Z1 und dem ersten inneren Anschluss Z2 und somit über dem ersten Siliziumdünnstab 81 abfällt. Aufgrund der hohen Spannung bricht in dem ersten Siliziumdünnstab 81 die atomare Integrität. Valente Elektronen werden aus der äußeren Atomschicht der Siliziumatome herausgerissen und ermöglichen einen Stromfluss durch den Siliziumdünnstab 81. Der Siliziumdünnstab 81 wird dadurch zunehmend leitend. Durch den so zu Stande gekommenen Stromfluss erfährt das Material abhängig von der Stromstärke einen Temperaturanstieg. Der Temperaturanstieg leistet einem weiteren Widerstandsverlust Vorschub. Mit zunehmender Temperatur wird der Siliziumdünnstab 81 leitender.

Die Primärspannung des ersten äußeren Transformators T1 ist dabei nichtlinear abhängig vom fließenden Primärstrom. Der erste äußere Leistungssteller überwacht die Primärspannung am ersten äußeren Transformator T1. Außerdem wird der Primärstrom durch die Primärwicklung des ersten äußeren Transformators T1 überwacht. Liegt die Spannung über der Primärwicklung bei einem Strom von 20 A unter 400 V, beispielsweise auf 200 V, hat der Siliziumdünnstab 81 gezündet.

Bleibt die Primärspannung dagegen konstant bei 400 V wurde der erste Siliziumdünnstab 81 nicht gezündet. Das Silizium ist nicht leitend geworden. In der Regel liegt dann ein Fehler vor.

Hat der erste Siliziumdünnstab 81 erfolgreich gezündet, wird der erste äußere Leistungssteller A100 ausgeschaltet. Es wird dann der zweite äußere Leistungssteller A400 eingeschaltet. Auch der zweite äußere Leistungssteller A400 wird so geregelt, dass sich über die Primärwicklung des zweite äußeren Transformators T4 ein Strom von 20 A einstellt. Im vierten Siliziumdünnstab 84 treten dann die gleichen Vorgänge auf wie schon zuvor im ersten Siliziumdünnstab 81. Der vierte Siliziumdünnstab 84 wird zunehmend leitend und die Spannung an der Primärseite des zweiten äußeren Transformators T4 nimmt ab. Hat sie einen Betrag von 200 V erreicht, kann man davon ausgehen, dass der vierte Siliziumdünnstab 84 erfolgreich gezündet worden ist.

Auf die gleiche Art und Weise werden dann nacheinander durch Einschalten des ersten inneren Leistungssteller A200 beziehungsweise des zweiten inneren Leistungsstellers A300 der zweite Siliziumdünnstab 82 bzw. der dritte Siliziumdünnstab 83 gezündet.

Wurden alle Siliziumdünnstäbe 81 bis 84 einmal erfolgreich gezündet, wird der Reaktor hochgefahren (Fig. 2). Dazu werden alle Leistungssteller 10 eingeschaltet und so eingestellt, dass durch die Primärwicklung in den Transformatoren T1 bis T4 ein Strom von 20 A fließt. Anschließend wird der primärseitige Strom schrittweise um 10 A erhöht. Die primärseitigen Spannungen werden dabei stets verglichen und solange die Spannungen nicht deutlich voneinander abweichen, beispielsweise um mehr als 5%, geht man davon aus, dass beim Hochfahren kein Fehler aufgetreten ist.

Wenn man zum Zünden der Siliziumdünnstäbe die Leistungssteller nicht nacheinander einschaltete sondern alle vier Leistungssteller gleichzeitig einschaltete und die daran angeschlossenen Siliziumdünnstäbe mit Spannung beaufschlagte, könnte man keine sichere Aussage treffen, ob alle Siliziumdünnstäbe gezündet haben. Bei der Verschaltung der Sekundärwicklungen der Transformatoren verketteten sich die einzelnen Ströme. Es wäre daher nicht vorhersagbar, durch welche Last welcher Strom fließt, wenn die Leistungssteller gleichzeitig eingeschaltet wären. Der Strom eines Transformators eines nicht gezündeten Stabes flösse dann zu einem großen Teil über die bereits gezündeten Stäbe. Um das zu vermeiden, werden zunächst alle Stäbe einzeln gezündet. Die dabei erreichte Temperaturerhöhung der Siliziumdünnstäbe ist ein positiver Nebeneffekt. Sind alle Siliziumdünnstäbe einmal erfolgreich gezündet worden, bringen diese für den gemeinsamen Vorgang beim Hochfahren des Reaktors relativ hohe Temperaturen mit. Das Zünden kann dann bei geringeren Spannungen erfolgen. Das Zünden der Siliziumdünnstäbe beim Hochfahren erfolgt schneller.

Nach dem Zünden des ersten Siliziumdünnstabes 81 wird zunächst der vierte Siliziumdünnstab 84 gezündet, weil die äußeren Anschlüsse 41 , 45 auf Massepotential liegen. Ein einzelnes Zünden des ersten Siliziumdünnstabes 81 und des vierten Siliziumdünnstabes 84 verhindert dabei ein so genanntes Schiefziehen der Phasen.

## Patentansprüche

1. Schaltungsanordnung (A) insbesondere zum Zünden von vier Siliziumdünnstäben (81 bis 84) in einem Reaktor zum Herstellen eine Anzahl von vier Siliziumstäben aus den Siliziumdünnstäben (81 bis 84) nach dem Siemens-Verfahren und zur Inbetriebnahme eines solchen Reaktors,
- mit einem ersten Anschluss, einem zweiten Anschluss und einem dritten Anschluss zur Verbindung mit einem dreiphasigen Spannungsnetz,
- mit zwei äußeren Anschlüssen (Z1, Z6) und wenigstens drei inneren Anschlüssen (Z2, Z3/Z4, Z5) zum Anschließen der Siliziumdünnstäbe (81 bis 84),
- mit zwei äußeren Transformatoren (T1, T4) und zwei inneren Transformatoren (T2, T3) mit je einer Primärwicklung und je einer Sekundärwicklung ,
- mit zwei äußere Leistungssteller (A100, A400), die zum Steuern des Stroms durch die Primärwicklungen der äußeren Transformatoren geeignet und eingerichtet sind,
- mit zwei inneren Leistungsstellern (A200, A300), die zum Steuern des Stroms durch die Primärwicklungen der inneren Transformatoren geeignet und eingerichtet sind,
- mit einem oder mehreren Steuerungsmitteln zum Steuern der Leistungssteller (A100, A200, A300, A400),
- wobei die Primärwicklung der äußeren Transformatoren (T1, T4) parallel geschaltet sind und diese Parallelschaltung einerseits mit dem ersten Anschluss (L1) und andererseits mit dem zweiten Anschluss (L2) zur Verbindung mit dem dreiphasigen Spannungsnetz verbunden ist,
- wobei die Primärwicklungen der inneren Transformatoren (T2, T3) parallel geschaltet sind und diese Parallelschaltung einerseits mit dem zweiten Anschluss (L2) und andererseits mit dem dritten Anschluss (L3) zur Verbindung mit dem dreiphasigen Spannungsnetz verbunden ist,
- wobei eine erste Anzapfung (T1.2.1) der Sekundärwicklung eines ersten (T1) der beiden äußeren Transformatoren (T1, T4) mit einem ersten der beiden äußeren Anschlüsse (Z1) verbunden ist und
- eine zweite Anzapfung (T1.2.2)der Sekundärwicklung des ersten äußeren Transformators (T1) mit einer ersten Anzapfung (T2.2.1) der Sekundärwicklung eines ersten Transformators (T2) der beiden inneren Transformatoren (T2, T3) und mit einem ersten Anschluss (Z2) der drei inneren Anschlüsse (Z2, Z3/4, Z5) verbunden ist,
- eine zweite Anzapfung (T2.2.2) der Sekundärwicklung des ersten inneren Transformators (T2) mit einer ersten Anzapfung (T3.2.1) der Sekundärwicklung eines zweiten Transformators (T3) der beiden inneren Transformatoren (T2, T3) und mit einem zweiten Anschluss (Z3/4) der drei inneren Anschlüsse (Z2, Z3/4, Z5) verbunden ist,
- eine zweite Anzapfung (T3.2.2) der Sekundärwicklung des zweiten inneren Transformators (T3) mit einer ersten Anzapfung (T4.2.1) der Sekundärwicklung eines zweiten Transformators (T4) der beiden äußeren Transformatoren (T1, T4) und mit einem dritten Anschluss (Z4) der drei inneren Anschlüsse (Z2, Z3/4, Z5) verbunden ist
- wobei eine zweite Anzapfung (T4.2.2) der Sekundärwicklung des zweite äußeren Transformators (T4) mit einem zweiten Anschluss (Z6) der beiden äußeren Anschlüsse (Z1, Z6) verbunden ist und
- wobei die beiden äußeren Anschlüsse (Z1, Z6) über Schaltmittel (31, 32) miteinander und mit Masse verbindbar sind.

2. Schaltungsanordnung (A) nach Anspruch 1 , **dadurch gekennzeichnet, dass** die Schaltungsanordnung (A) Stromerfassungsmittel aufweist, um den Strom durch die Primärwicklungen der Transformatoren (T1, T2, T3, T4) zu erfassen.

3. Schaltungsanordnung (A) nach Anspruch 1 oder 2, **dadurch gekennzeichnet, dass** die Schaltungsanordnung (A) Spannungserfassungsmittel aufweist, um die Spannung über den Primärwicklungen der Transformatoren (T1, T2, T3, T4) zu erfassen.

4. Schaltungsanordnung (A) nach Anspruch 2 und 3, **dadurch gekennzeichnet, dass** die Stromerfassungsmittel und die Spannungserfassungsmittel mit dem oder den Steuerungsmitteln verbunden sind.

5. Schaltungsanordnung (A) nach einem der Ansprüche 1 bis 4, **dadurch gekennzeichnet, dass** die Transformatoren (T1, T2, T3, T4) zum Transformieren einer primärseitigen Niederspannung, zum Beispiel 400 V, in einer sekundärseitigen Mittelspannung, zum Beispiel 6kV bis 8kV geeignet und eingerichtet sind.

6. Schaltungsanordnung (A) nach einem der Ansprüche 1 bis 5, **dadurch gekennzeichnet, dass** die Transformatoren (T1, T2, T3, T4) ein Übersetzungsverhältnis von 15 bis 20 haben.

7. Schaltungsanordnung (A) nach einem der Ansprüche 1 bis 6, **dadurch gekennzeichnet, dass** das die Primärwicklungen bzw. die Sekundärwicklungen der Transformatoren (T1, T2, T3, T4) gleiche Windungszahlen haben und im gleichen Sinn gewickelt sind.

8. Schaltungsanordnung (A) nach einem der Ansprüche 1 bis 7, **dadurch gekennzeichnet, dass** das oder die Steuerungsmittel geeignet und eingerichtet ist bzw. sind, zum Zünden der mit einem der äußeren Anschlüsse (Z1, Z6)) und einem der inneren Anschlüsse (Z2, Z3/4, Z5) verbindbaren Siliziumdünnstäbe (81 , 84) nacheinander zunächst die äußeren Leistungsteller (A100, A200) einzuschalten und die Schaltmittel (31, 32) zum Verbinden der äußeren Anschlüsse (Z1, Z6) miteinander und mit der Masse zu schließen.

9. Schaltungsanordnung (A) nach Anspruch 8, **dadurch gekennzeichnet, dass** das oder die Steuerungsmittel (50) geeignet und eingerichtet ist bzw. sind, zum Zünden der ausschließlich mit zwei der inneren Anschlüsse (Z2, Z3/4, Z5) verbindbaren Siliziumdünnstäbe (82, 83) nacheinander die inneren Leistungsteller (A200, A300) einzuschalten und die Schaltmittel (31, 32) zum Verbinden der äußeren Anschlüsse (Z1, Z6) miteinander und mit der Masse zu schließen.

10. Schaltungsanordnung (A) nach Anspruch 8 oder 9, **dadurch gekennzeichnet, dass** das oder die Steuerungsmittel und die Leistungssteller (A100, A200, A300, A400)) geeignet und eingerichtet sind, den Strom durch die Primärwicklungen zu regeln.

11. Schaltungsanordnung nach 10, **dadurch gekennzeichnet, dass** das oder die Steuerungsmittel geeignet und eingerichtet ist bzw. sind die Leistungsteller (A100, A200, A300, A400) auszuschalten, wenn bei eingeregeltem Strom durch die Primärwicklung die Spannung über der Primärwicklung auf einen vorgegebenen Betrag, zum Beispiel um die Hälfte absinkt.

12. Schaltungsanordnung (A) nach Anspruch 1 1 , **dadurch gekennzeichnet, dass** das oder die Steuerungsmittel geeignet und eingerichtet ist bzw. sind, nach dem Ausschalten des letzten Leistungsstellers (A300) alle Leistungssteller (A100, A200, A300, A400) gleichzeitig zur Inbetriebnahme des Reaktors einzuschalten, um an den Primärwicklung aller Transformatoren (T1, T2, T3, T4) einen gleichen Strom mit einem vorgegebenen Sollwert einzustellen.

13. Schaltungsanordnung (A) nach Anspruch 1 1 , **dadurch gekennzeichnet, dass** das oder die Steuerungsmittel geeignet und eingerichtet ist bzw. sind, den Sollwert schrittweise zu erhöhen.

14. Schaltungsanordnung (A) nach Anspruch 11 oder 12, **dadurch gekennzeichnet, dass** das oder die Steuerungsmittel geeignet und eingerichtet ist bzw. sind alle den Sollwert vorübergehend herabzusetzen, wenn die Spannung über die Primärwicklung eines der Transformatoren (T1, T2, T3, T4) um einen vorgegebenen Betrag von den Spannungen über die Primärwicklungen der anderen Transformatoren (T1, T2, T3, T4) abweicht.

15. Schaltungsanordnung (A) nach einem der Ansprüche 11 bis 13, **dadurch gekennzeichnet, dass** das oder die Steuerungsmittel geeignet und eingerichtet ist bzw. sind alle Leistungssteller (A100, A200, A300, A400) auszuschalten, wenn die Spannung über die Primärwicklung eines der Transformatoren (T1, T2, T3, T4) der Spannung im Leerlauf des Transformators (T1, T2, T3, T4) entspricht.

16. Schaltungsanordnung (A) nach einem der Ansprüche 1 bis 14, **dadurch gekennzeichnet, dass** jedem Leistungssteller (A100, A200, A300, A400) ein Steuermittel zugeordnet ist und die Schaltungsanordnung ein übergeordnetes Steuermittel aufweist, dass mit den den Leistungsstellern (A100, A200, A300, A400) zugeordneten Steuermittel gekoppelt ist.
